(19) Europäisches Patentamt / European Patent Office / Office européen des brevets

(11) **EP 3 469 446 B1**

(12) **FASCICULE DE BREVET EUROPEEN**

(45) Date de publication et mention de la délivrance du brevet:
**30.10.2024 Bulletin 2024/44**

(21) Numéro de dépôt: **17733507.2**

(22) Date de dépôt: **06.06.2017**

(51) Classification Internationale des Brevets (IPC):
**G06F 1/04** (2006.01)

(52) Classification Coopérative des Brevets (CPC):
**G06F 1/04**

(86) Numéro de dépôt international:
**PCT/FR2017/051415**

(87) Numéro de publication internationale:
**WO 2017/212157 (14.12.2017 Gazette 2017/50)**

(54) **PROCÉDÉ DE CALIBRATION D'UNE HORLOGE D'UN CIRCUIT DE CARTE À PUCE, ET SYSTÈME ASSOCIÉ**

VERFAHREN ZUR KALIBRIERUNG EINES TAKTES EINER CHIPKARTENSCHALTUNG UND ZUGEHÖRIGES SYSTEM

METHOD OF CALIBRATING A CLOCK OF A CHIP CARD CIRCUIT, AND ASSOCIATED SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.06.2016 FR 1655254**

(43) Date de publication de la demande:
**17.04.2019 Bulletin 2019/16**

(73) Titulaire: **IDEMIA France**
**92400 Courbevoie (FR)**

(72) Inventeurs:
• **AMIOT, Lucien**
  **92400 Courbevoie (FR)**
• **DUONG, Bastien**
  **92400 Courbevoie (FR)**

(74) Mandataire: **Simon, Géraldine Marie**
**Idemia France**
**2, Place Samuel de Champlain**
**92400 Courbevoie (FR)**

(56) Documents cités:
EP-A1- 1 772 794     EP-A2- 0 770 953
US-A1- 2006 158 268     US-A1- 2012 084 594

**Description**

Arrière-plan de l'invention

La présente invention se rapporte au domaine des horloges de circuits de cartes à puce, et concerne plus particulièrement un procédé de calibration d'une horloge d'un circuit de carte à puce.

L'invention s'applique notamment, mais de façon non exclusive, aux cartes bancaires de format ID-1 spécifiées dans la norme ISO/IEC 7810, présentant les dimensions 85,6 millimètres par 53,98 millimètres par 0,76 millimètres.

L'invention peut en outre s'appliquer aux cartes à puce avec contacts dont les caractéristiques sont détaillées dans la norme ISO/IEC 7816, et peut aussi s'appliquer aux cartes à puce sans contact dont les caractéristiques sont détaillées dans la norme ISO/IEC 14443.

De façon connue, certaines cartes à puce comportent une horloge permettant de réaliser des opérations en fonction du temps, par exemple des opérations de génération et d'affichage d'un code de vérification dynamique (« motion code » en terminologie anglo-saxonne), utilisés pour sécuriser les paiements bancaires en ligne. Lors d'un paiement en ligne, l'utilisateur d'une telle carte à puce entre le numéro de carte PAN (« Primary Account Number » en terminologie anglo-saxonne), la date d'expiration de la carte, le nom du porteur de carte, ainsi qu'un code de vérification dynamique affiché par la carte, un nouveau code de vérification dynamique étant généré et affiché plusieurs fois par jour.

Les opérations de génération et d'affichage d'un code de vérification dynamique nécessitent une horloge très précise. Par exemple, pour réaliser l'opération de génération d'un code de vérification dynamique, la carte doit être synchronisée temporellement avec un serveur adapté pour vérifier le code. Si l'horloge de la carte n'est pas précise, la carte peut être désynchronisée du serveur, ce qui peut engendrer une erreur et un arrêt du paiement bancaire.

L'horloge est donc calibrée lors de la fabrication de la carte à puce. Un procédé de calibration connu comprend une étape de mesure de la fréquence de résonnance de l'oscillateur de l'horloge, au moyen d'un instrument de mesure par contact, tel qu'une sonde.

La mesure est effectuée pendant une courte durée, de l'ordre de la douzaine de secondes, en positionnant les contacts de la sonde sur des contacts de l'horloge. Après traitement de la mesure, des données de calibration sont enregistrées dans l'horloge.

La durée de la mesure étant très courte, ce procédé de calibration ne permet pas de prendre en compte des facteurs externes présents dans l'environnement de stockage de la carte, tels que la température, le bruit, l'absence ou la présence de rayons ultraviolets, la batterie de la carte, etc., l'environnement de stockage pouvant par ailleurs changer lors du transport de la carte.

De plus, la mesure peut varier en fonction de l'instrument de mesure utilisé, les instruments de mesure n'étant pas tous calibrés de la même façon.

La calibration établie à partir de la mesure est ainsi peu précise.

En outre, la mesure nécessite la présence de plages de contact sur le circuit de l'horloge, la présence d'un opérateur, ainsi que la maintenance de l'instrument de mesure. Les coûts et la durée de production de la carte à puce sont ainsi importants.

Les documents EP0770953 A2 et EP1772794 A1 décrivent des procédés de calibration d'une horloge de carte à puce.

Il existe donc un besoin pour une solution permettant une calibration plus précise et une réduction de la durée et des coûts de production de la carte à puce.

Objet et résumé de l'invention

L'invention est définie par les revendications indépendantes.

Les revendications dépendantes définissent des modes de réalisation particuliers.

La lecture de la deuxième donnée temporelle étant une lecture sans contact, le procédé n'utilise pas d'instruments de mesure avec des contacts. La précision de la calibration est ainsi améliorée. En outre, les coûts et la durée de production de la carte à puce sont réduits.

Le procédé selon l'invention n'utilise pas de capteur de température, qui n'est pas adapté pour la calibration d'horloges de cartes à puce. En effet, un capteur de température, pour être utilisé pour calibrer une horloge, devrait être coulé dans de la résine. Or, la résine peut altérer les mesures du capteur, et rendre ainsi les mesures du capteur inutilisables. En outre, la fabrication d'une carte à puce peut nécessiter une lamination à chaud du corps de carte, ce qui peut dérégler un capteur de température.

La première durée entre le premier instant et le deuxième instant est supérieure ou égale à trois jours.

Cette première durée permet ainsi de prendre en compte des facteurs externes présents dans l'environnement de stockage de la carte, par exemple la température, le bruit, l'absence ou la présence de rayons ultraviolets, la batterie de la carte, etc., l'environnement de stockage pouvant par ailleurs changer lors du transport de la carte.

**Le** procédé comprend en outre une étape de blocage de la communication entre le circuit comportant l'horloge et les terminaux externes à la carte à puce.

La sécurité de la carte à puce est ainsi améliorée.

Le programme peut utiliser n'importe quel langage de programmation, et être sous la forme de code source, code objet, ou de code intermédiaire entre code source et code objet, tel que dans une forme particulièrement compilée, ou dans n'importe quelle autre forme souhaitable.

Le support d'informations peut être n'importe quelle entité ou dispositif capable de stocker le programme. Par exemple, le support peut comporter un moyen de stockage, tel qu'une mémoire non volatile réinscriptible (de type « EEPROM » ou « Flash NAND » par exemple), ou tel qu'une « ROM », par exemple un « CD ROM » ou une « ROM » de circuit microélectronique, ou encore un moyen d'enregistrement magnétique, par exemple une disquette (« floppy disc ») ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

## Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, de manière schématique, un système de calibration conforme à un exemple de mode de réalisation de l'invention ;
- la figure 2 représente, de manière schématique, un exemple de vue en coupe d'une carte à puce du système de calibration de la figure 1 ;
- la figure 3 représente, sous forme d'un organigramme, les principales étapes d'un procédé de calibration conforme à un exemple de mode de réalisation de l'invention ;
- la figure 4 est un graphe représentant différents instants au moment desquels sont réalisées certaines étapes d'un procédé de calibration conforme à un exemple de mode de réalisation de l'invention ;
- la figure 5 représente, sous forme d'un organigramme, les principales étapes d'un procédé de calibration conforme à un exemple de mode de réalisation de l'invention ;
- la figure 6 représente, sous forme de graphes, des signaux d'oscillateurs d'horloge et des signaux d'oscillateurs d'horloge après calibration selon un procédé de calibration conforme à un exemple de mode de réalisation de l'invention ;
- la figure 7 représente, sous forme d'un organigramme, les principales étapes d'un procédé de fabrication d'une carte à puce comportant un procédé de calibration conforme à un exemple de mode de réalisation de l'invention.

## Description détaillée de plusieurs modes de réalisation

La présente invention se rapporte au domaine des horloges de circuits de cartes à puce, et concerne plus particulièrement un procédé de calibration d'une horloge d'un circuit de carte à puce.

L'invention s'applique notamment, mais de façon non exclusive, aux cartes bancaires de format ID-1 spécifiées dans la norme ISO/IEC 7810, présentant les dimensions 85,6 millimètres par 53,98 millimètres par 0,76 millimètres.

L'invention peut en outre s'appliquer aux cartes à puce avec contacts dont les caractéristiques sont détaillées dans la norme ISO/IEC 7816, et peut aussi s'appliquer aux cartes à puce sans contact dont les caractéristiques sont détaillées dans la norme ISO/IEC 14443.

Par « horloge », on entend un circuit électronique émettant en continu des impulsions périodiques permettant un décompte précis du temps pour un système.

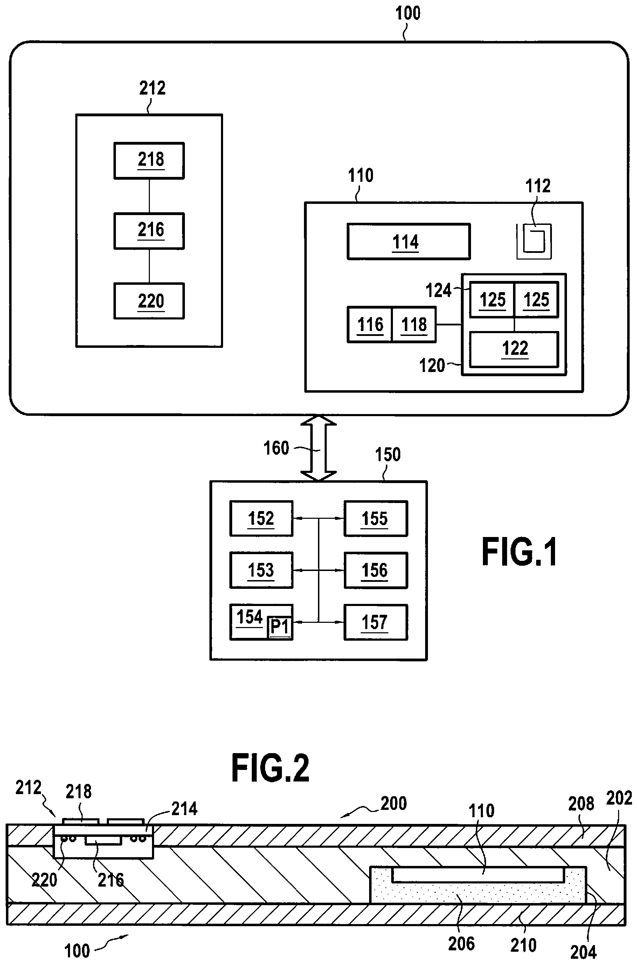

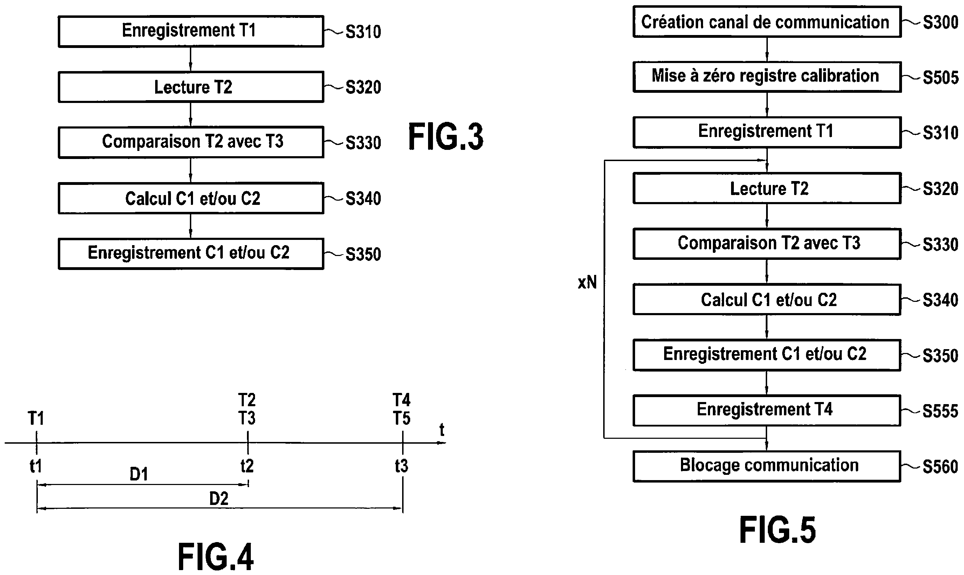

La **figure 1** représente, de manière schématique, un système de calibration conforme à un exemple de mode de réalisation de l'invention, apte à mettre en oeuvre un procédé de calibration conforme à un exemple de mode de réalisation, par exemple le procédé décrit en référence à la figure 3 ou le procédé décrit en référence à la figure 5.

Le système comporte une carte à puce 100 et un terminal 150.

La carte à puce 100 comporte un circuit 110 comportant une horloge 120 pouvant être calibrée selon un procédé de calibration conforme à un exemple de mode de réalisation de l'invention. Le circuit 110 comporte en outre un microprocesseur 116, une mémoire 118, une antenne 112 de communication sans fil et peut comporter une batterie 114.

L'horloge 120 comporte un oscillateur 122 et un circuit de traitement 124 du signal émis par l'oscillateur, le circuit de traitement 124 comportant des registres 125. Le circuit de traitement 124 est configuré pour compter le temps.

Dans un exemple, le circuit 110 est un circuit électronique souple, par exemple adapté pour générer et afficher un code de vérification dynamique (« motion code » en terminologie anglo-saxonne) de la carte, permettant une sécurisation des paiements bancaires en ligne. Dans cet exemple, le circuit 110 comporte un écran adapté à afficher un code de vérification dynamique.

Dans un exemple, l'horloge est une horloge temps réel, ayant pour acronyme RTC (« real-time clock » en terminologie anglo-saxonne), pouvant utiliser l'échelle de temps UTC (« Temps Universel Coordonné » ou « Coordinated Universal Time » en terminologie anglo-saxonne).

De plus, l'oscillateur 122 peut être un oscillateur à quartz basse fréquence, résonnant par exemple à une fréquence de résonance *fr* d'environ 32 kilohertz.

Les registres 125 comprennent par exemple des registres calendaires ou temporels, au moins un registre de calibration, et peuvent comporter des registres de configuration RTC (par exemple des registres de détection d'erreurs, de lecture et écriture, ou concernant un type d'alarme). Dans un exemple, le circuit de traitement 124 comporte au moins un registre parmi un premier registre temporel adapté pour compter les secondes, un deuxième registre temporel adapté pour compter les minutes, un troisième registre temporel adapté pour compter les heures, un quatrième registre temporel adapté pour compter les jours, un cinquième registre temporel adapté pour compter les mois et un sixième registre temporel adapté pour compter les années.

La carte à puce 100 peut en outre comporter un circuit ou module séparé et indépendant du circuit 110, tel que le module 212 décrit en référence à la figure 2.

Le terminal 150 est par exemple un terminal de personnalisation, utilisé pour personnaliser de manière logicielle la carte à puce lors de la fabrication de la carte à puce.

Le terminal 150 présente l'architecture conventionnelle d'un ordinateur. Le terminal 150 comporte notamment un processeur 152, un système d'exploitation 153, une mémoire morte 154 (de type « ROM »), une mémoire non volatile réinscriptible 155 (de type « EEPROM » ou « Flash NAND » par exemple), une mémoire volatile réinscriptible 156 (de type « RAM »), et une interface de communication 157.

Dans cet exemple, la mémoire morte 154 constitue un support d'informations (ou d'enregistrement) conforme à un mode de réalisation particulier de l'invention. Dans la mémoire morte 154 est stocké un programme d'ordinateur P1 permettant au terminal 150 de mettre en oeuvre un procédé de calibration conforme à un exemple de mode de réalisation de l'invention. En variante, le programme d'ordinateur P1 est stocké dans la mémoire non volatile réinscriptible 155.

Un canal de communication 160 peut exister entre la carte à puce 100 et le terminal 150, plus précisément entre le circuit 110 comportant l'horloge 120 et l'interface de communication 157 du terminal 150.

Le système peut en outre comporter un serveur distant du terminal 150 (non représenté). Ce serveur présente l'architecture conventionnelle d'un ordinateur, et comporte notamment un processeur, un système d'exploitation, une mémoire morte (de type « ROM »), une mémoire non volatile réinscriptible (de type « EEPROM » ou « Flash NAND » par exemple), une mémoire volatile réinscriptible (de type « RAM »), et une interface de communication, apte à communiquer avec l'interface de communication 157 du terminal 150.

La figure 2 représente, de manière schématique, un exemple de vue en coupe de la carte à puce 100 du système de calibration de la figure 1. La carte à puce 100 comporte un corps de carte 200 comportant une première couche 202 pouvant comporter une cavité 204. Le circuit 110 est alors positionné dans la cavité 204 et est fixé au moyen d'une résine 206. Le corps de carte 200 peut en outre comporter au moins une autre couche, par exemple une deuxième couche 208 et une troisième couche 210, la première couche 202 étant par exemple positionnée entre la deuxième couche 208 et la troisième couche 210. En variante, le corps de carte 200 comporte uniquement la première couche 202.

La carte à puce 100 peut comporter un module 212 séparé et indépendant du circuit 110. Dans un exemple, le module 212 comporte un substrat 214 et une puce électronique 216 fixée au substrat 214. La puce électronique 216 est adaptée pour effectuer un paiement bancaire selon le standard « EMV » (acronyme de la terminologie anglo-saxonne « European Mastercard Visa »). La puce électronique 216 met ainsi en oeuvre des applications permettant d'effectuer des transactions bancaires.

Le module 212 peut comporter des contacts externes 218, adaptés pour effectuer un paiement avec contact, et/ou une antenne 220, adaptée pour effectuer un paiement sans contact. En variante, la carte à puce 100 ne comporte pas de module 212.

La figure 3 représente un procédé de calibration d'une horloge d'un circuit de carte à puce conforme à un exemple de mode de réalisation de l'invention. Dans la suite de la description de la figure 3, il est considéré que le procédé de calibration est mis en oeuvre par le système de calibration de la figure 1, et donc que l'horloge devant être calibrée est l'horloge 120 de la carte à puce 100 du système de calibration de la figure 1. Cependant, le procédé peut être mis en oeuvre par tout système de calibration comportant au moins un terminal et une carte à puce.

A un premier instant t1, une première donnée temporelle T1 du terminal 150 est enregistrée dans l'horloge 120 (étape S310), au moyen d'un canal de communication 160 entre le terminal 150 et le circuit 110 comportant l'horloge 120.

A un deuxième instant t2, dans une étape S320, une deuxième donnée temporelle T2 de l'horloge 120 est lue. La deuxième donnée temporelle T2 de l'horloge 120 correspond à la première donnée temporelle T1 incrémentée par l'horloge 120 en fonction d'une première durée D1 entre le premier instant t1 et le deuxième instant t2 (voir figure 4). La lecture de la deuxième donnée temporelle T2 est une lecture sans contact, et est effectuée au moyen du canal de communication 160.

Dans une étape S330, la deuxième donnée temporelle T2 est comparée avec une troisième donnée temporelle T3. La troisième donnée temporelle T3 correspond à la première donnée temporelle T1, incrémentée en fonction de la première durée D1 entre le premier instant t1 et le deuxième instant t2, par le terminal 150 ou le serveur distant.

Dans une étape S340, une première donnée de calibration C1 est calculée en fonction du résultat de la comparaison de l'étape S330.

Dans une étape S350, la première donnée de calibration C1 est enregistrée dans l'horloge 120, au moyen du canal de communication 160.

La lecture de la deuxième donnée temporelle T2 étant une lecture sans contact, le procédé n'utilise pas d'instruments de mesure avec des contacts. La précision de la calibration est ainsi améliorée. En outre, les coûts et la durée de production de la carte à puce sont réduits.

Le procédé selon l'invention n'utilise pas de capteur de température, qui n'est pas adapté pour la calibration d'horloges de cartes à puce. En effet, un capteur de température, pour être utilisé pour calibrer une horloge, devrait être coulé dans de la résine. Or, la résine peut altérer les mesures du capteur, et rendre ainsi les mesures du capteur inutilisables. En outre, la fabrication d'une carte à puce peut nécessiter une lamination à chaud du corps de carte, ce qui peut dérégler un capteur de température.

La **figure 5** représente un procédé de calibration d'une horloge d'un circuit de carte à puce conforme à un exemple de mode de réalisation de l'invention.

Dans la suite de la description de la figure 5, il est considéré que le procédé de calibration est mis en oeuvre par le système de calibration de la figure 1, et donc que l'horloge devant être calibrée est l'horloge 120 de la carte à puce 100 du système de calibration de la figure 1. Cependant, le procédé peut être mis en oeuvre par tout système de calibration comportant au moins un terminal et une carte à puce.

Dans une étape S300, un canal de communication 160 peut être créé entre le circuit 110 comportant l'horloge 120 et le terminal 150.

En variante, le canal de communication 160 est préexistant.

Le canal de communication 160 peut être sécurisé. Ainsi, dans un exemple, l'accès au canal de communication 160 nécessite une authentification. Le circuit 110 et le terminal 150 doivent donc être authentifiés avant de pouvoir communiquer via le canal de communication 160. Le nombre de tentatives d'authentification est typiquement limité.

Dans un exemple, l'authentification est effectuée au moyen d'un mot de passe, spécifique pour chaque carte à puce 100. Le canal de communication 160 est ainsi sécurisé au moyen d'un mot de passe.

Le mot de passe est entré par l'opérateur du terminal 150 et est sous format d'octets. Le format du mot de passe est défini lors de la création du système d'exploitation du circuit 110 et peut être généré de manière aléatoire.

Dans un autre exemple, l'authentification est effectuée via des moyens cryptographiques, typiquement des clés privées ou des clés publiques. Le canal de communication 160 est sécurisé au moyen d'une authentification mutuelle entre le terminal 150 et le circuit 110, au moyen de clés privées ou de clés publiques. Un encodage « TLV » (acronyme de la terminologie anglosaxonne « Type Length Value » peut être utilisé selon le protocole ISO/IEC 15693 et au moyen d'une paire de clés, par exemple 3DES, Hash1,2,3, AES, RSA, ou MD5.

Le procédé peut en outre comporter une étape S505 de mise à zéro du registre de calibration avant le premier instant t1 ou au premier instant t1.

Lors de cette étape S505 de mise à zéro, la valeur « 0 » est écrite dans chaque registre de calibration de l'horloge 120.

A un premier instant t1, une première donnée temporelle T1 du terminal 150 est enregistrée dans l'horloge 120 (étape S310), au moyen du canal de communication 160. Le terminal 150 enregistre donc la première donnée temporelle T1 dans l'horloge 120 via le canal de communication 160. Dans un exemple, la première donnée temporelle T1 est enregistrée dans les registres 125 temporels de l'horloge 120. L'enregistrement de la première donnée temporelle T1 par le terminal 150 dans l'horloge 120 peut être une écriture sans contact, notamment effectuée au moyen de l'antenne 112 du circuit 110.

Dans un exemple, la première donnée temporelle T1 correspond à la date et à l'heure courante du terminal 150, donnée par l'horloge du terminal 150, à l'instant t1. Après l'étape 310 d'enregistrement, la première donnée temporelle T1 est incrémentée par l'horloge 120.

A un deuxième instant t2, dans une étape S320, une deuxième donnée temporelle T2 de l'horloge 120 est lue. La deuxième donnée temporelle T2 de l'horloge 120 correspond à la première donnée temporelle T1 incrémentée par l'horloge 120 en fonction d'une première durée D1 entre le premier instant t1 et le deuxième instant t2 (voir figure 4). Plus précisément, la deuxième donnée temporelle T2 de l'horloge 120 correspond à la première donnée temporelle T1 incrémentée par l'horloge 120 en fonction de la fréquence de résonance de l'oscillateur 122 de l'horloge 120 pendant la première durée D1. Le deuxième instant t2 est postérieur au premier instant t1. La lecture de la deuxième donnée temporelle T2 est une lecture sans contact, notamment effectuée au moyen de l'antenne 112 du circuit 110. La lecture de la deuxième donnée temporelle T2 est effectuée au moyen du canal de communication 160, le terminal 150 lisant la deuxième donnée temporelle T2 via le canal de communication 160.

Dans un exemple, la première durée D1 entre le premier instant t1 et le deuxième instant t2 est supérieure ou égale à trois jours. Cette première durée D1 permet ainsi de prendre en compte des facteurs externes présents dans l'environnement de stockage de la carte à puce 100, par exemple la température, le bruit, l'absence ou la présence de rayons ultraviolets, la batterie de la carte, etc., l'environnement de stockage pouvant par ailleurs changer lors du transport de la carte.

Dans une étape S330, la deuxième donnée temporelle T2 est comparée avec une troisième donnée temporelle T3. La troisième donnée temporelle T3 correspond à la première donnée temporelle T1, incrémentée en fonction de la première durée D1 entre le premier instant t1 et le deuxième instant t2, par le terminal 150 ou par le serveur distant.

Plus précisément, la troisième donnée temporelle T3 peut correspondre à la première donnée temporelle T1 incrémentée par le terminal 150, par exemple en fonction de la fréquence de résonance de l'oscillateur de l'horloge du terminal 150, et éventuellement en fonction d'une ou plusieurs données de calibration de l'horloge du terminal 150, pendant la première durée D1.

Dans un autre exemple, la troisième donnée temporelle T3 correspond à la première donnée temporelle, transmise par le terminal 150 au serveur distant, puis incrémentée par le serveur distant en fonction de la première durée D1 entre le premier instant t1 et le deuxième instant t2.

L'étape S330 de comparaison peut comprendre une sous-étape de soustraction de la troisième donnée temporelle T3 à la deuxième donnée temporelle T2 et une sous-étape de division du résultat de la soustraction par la première durée D1 entre le premier instant t1 et le deuxième instant t2. Le résultat de l'étape S330 de comparaison, appelé dérive d de l'horloge 120, peut donc être calculé à partir de la formule suivante :

$$d = \frac{T2 - T3}{D1}$$

Dans une étape S340, une première donnée de calibration C1 est calculée en fonction du résultat de la comparaison de l'étape S330. Une deuxième donnée de calibration C2 peut aussi être calculée à l'étape S340.

L'étape S340 de calcul peut comprendre une sous-étape de calcul de la dérive par jour $dj$ de l'horloge 120, à partir de la dérive d de l'horloge 120. Dans un exemple, D1 est un nombre de jour et la dérive par jour $dj$ est égale à la dérive d de l'horloge 120.

Ensuite, l'étape S340 de calcul peut comprendre une sous-étape de calcul de la dérive en hertz $dhz$, en fonction de la dérive par jour $dj$ et de la fréquence de résonance fr de l'horloge 120. La dérive en hertz $dhz$ peut être calculée à partir de la formule suivante :

$$dhz = \frac{dj}{60 \times 60 \times 24} \times fr$$

où $dhz$ et $fr$ sont en hertz et $dj$ en secondes par jour.

L'étape S340 de calcul peut ensuite comprendre une sous-étape de calcul de la fréquence réelle de résonance $frr$, en fonction de la dérive en hertz $dhz$ et de la fréquence de résonance $fr$. La fréquence réelle de résonnance $frr$ peut être calculée à partir de la formule suivante :

$$frr = dhz + fr$$

où $frr$, $dhz$ et $fr$ sont en hertz.

Dans un exemple, la fréquence de résonance $fr$ de l'horloge 120 est égale à 32768 hertz, et la dérive par jour $dj$ de l'horloge est égale à 23,3 secondes par jour. La dérive en hertz $dhz$ est alors égale à 8,83674 hertz et la fréquence réelle de résonance $frr$ est égale à 32776,83674 hertz.

L'étape S340 de calcul peut ensuite comprendre une sous-étape d'obtention de la première donnée de calibration C1 en fonction de la fréquence réelle de résonance $frr$, typiquement au moyen de tables, pouvant être fournies par le constructeur de l'horloge. La deuxième donnée de calibration C2 peut aussi être obtenue en fonction de la fréquence réelle de résonance, typiquement au moyen de tables.

Lorsque la première donnée temporelle T1 est incrémentée par le terminal 150 afin d'obtenir la troisième donnée temporelle T3, l'étape S330 de comparaison et l'étape S340 de calcul sont mises en oeuvre par le terminal 150.

En variante, lorsque la première donnée temporelle T1 est incrémentée par le serveur distant afin d'obtenir la troisième donnée temporelle T3, la sous étape de soustraction de l'étape S330 de comparaison et l'étape S340 de calcul sont mises en oeuvre par le serveur distant. Dans cette variante, le serveur distant transmet ensuite la première donnée de calibration C1 au terminal 150.

Dans une étape S350, la première donnée de calibration C1 est enregistrée dans l'horloge 120, via le canal de communication 160. Dans un exemple, la première donnée de calibration C1 est enregistrée dans le registre 125 de calibration de l'horloge 120. L'enregistrement de la première donnée de calibration C1 peut être une écriture sans contact. La deuxième donnée de calibration C2 peut aussi être enregistrée dans l'horloge 120 à l'étape S350. L'horloge 120 est alors calibrée.

Le procédé peut en outre comporter une étape S555 d'enregistrement, dans l'horloge 120, via le canal de communication 160, d'une quatrième donnée temporelle T4 obtenue par le terminal 150 à un troisième instant t3. La quatrième donnée temporelle T4 correspond à la première donnée temporelle T1 incrémentée en fonction d'une deuxième durée D2 entre le premier instant t1 et le troisième instant t3. Le troisième instant t3 est postérieur au deuxième instant t2, le deuxième instant t2 étant postérieur au premier instant t1 (voir figure 4).

La quatrième donnée temporelle T4 peut correspondre à la première donnée temporelle T1, incrémentée par le terminal 150 en fonction de la fréquence de résonance de l'oscillateur de l'horloge du terminal 150, et éventuellement en fonction d'une ou plusieurs données de calibration de l'horloge du terminal 150, pendant la deuxième durée D2.

Dans un autre exemple, la quatrième donnée temporelle T4 correspond à la première donnée temporelle incrémentée par le serveur distant en fonction de la deuxième durée D2 entre le premier instant t1 et le troisième instant t3.

La quatrième donnée temporelle T4, enregistrée dans les registres 125 temporels de l'horloge 120, remplace une cinquième donnée temporelle T5 correspondant à la première donnée temporelle T1 incrémentée par l'horloge 120 en fonction de la deuxième durée D2 entre le premier instant t1 et le troisième instant t3. Plus précisément, la cinquième donnée temporelle T5 correspond à la première donnée temporelle T1, incrémentée par l'horloge 120 en fonction de la fréquence de résonnance *fr* de l'oscillateur 122 de l'horloge 120 pendant la deuxième durée D2. Le remplacement de la cinquième donnée temporelle T5 par la quatrième donnée temporelle T4 peut consister en une mise à jour partielle des registres temporels 125. Par exemple, seul le registre temporel 125 adapté pour compter les secondes peut être mis-à-jour.

La cinquième donnée temporelle T5, qui n'est pas précise car l'horloge 120 n'est pas calibrée avant l'étape S350, est ainsi supprimée de l'horloge 120.

La quatrième donnée temporelle T4 est alors incrémentée par l'horloge 120, en fonction de la fréquence de résonnance *fr* de l'oscillateur 122 de l'horloge 120, de la première donnée de calibration C1 et éventuellement en fonction de la deuxième donnée de calibration C2. La quatrième donnée temporelle T4 est ainsi incrémentée de manière précise.

Plus précisément, le signal émis par l'oscillateur 122 étant divisé en périodes de calibration, la première donnée de calibration C1, et éventuellement la deuxième donnée de calibration C2, permet à l'horloge 120 d'ajouter ou de retirer des impulsions de l'oscillateur 122 pour chaque période de calibration. Dans un exemple, la période de calibration égale à 16 secondes ou à 32 secondes. L'horloge 120 est ainsi calibrée précisément à chaque période de calibration.

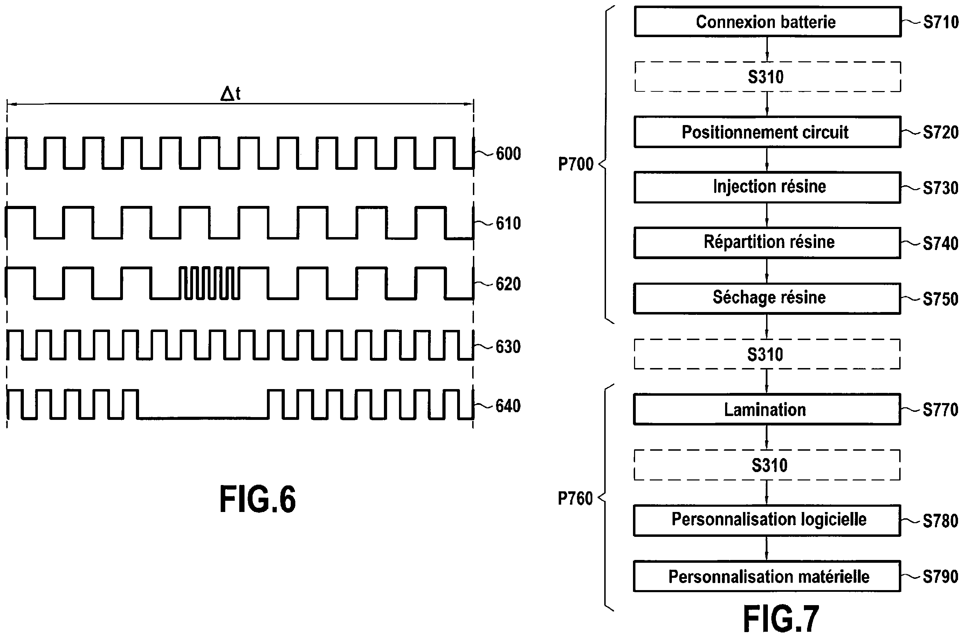

La **figure 6** montre un exemple de calibration du signal de l'horloge 120. Le signal 600 représente un signal théorique d'oscillateur, à une fréquence de résonnance nominale.

Le signal 610 représente un premier signal d'oscillateur devant être calibré, la fréquence de résonance de l'oscillateur étant plus basse que la fréquence nominale. Le signal 620 représente le premier signal d'oscillateur ayant été calibré. Des impulsions ont été ajoutées au premier signal 610 d'oscillateur afin d'obtenir le même nombre d'impulsion que le signal 600 théorique d'oscillateur, pendant la période de calibration Δt.

Le signal 630 représente un deuxième signal d'oscillateur devant être calibré, la fréquence de résonnance de l'oscillateur étant plus élevée que la fréquence nominale. Le signal 640 représente le deuxième signal d'oscillateur ayant été calibré. Des impulsions ont été retirées au deuxième signal 630 d'oscillateur afin d'obtenir le même nombre d'impulsion que le signal 600 théorique d'oscillateur, pendant la période de calibration Δt.

Dans un exemple, les étapes S505, S310, S320, S350 et S555 de lecture ou d'écriture (ou enregistrement) sans contact de données de l'horloge 120 par le terminal 150 comprennent une transmission d'une requête de lecture ou d'écriture au moyen d'une antenne de l'interface de communication 157 du terminal 150 et de l'antenne 112 du circuit 110 comportant l'horloge 120, via le canal de communication 160. L'énergie reçue par l'antenne 112 du circuit 110 active le microprocesseur 116. Le microprocesseur 116 analyse la requête, puis lit ou écrit la ou les données déduites de la requête dans les registres 125 de l'horloge 120. Les étapes S505, S310, S320, S350 et S555 de lecture ou d'écriture sont ainsi mises en oeuvre par le terminal 150 et la carte à puce 100.

La présence du canal de communication 160 peut permettre aux étapes S505, S310, S320, S350 et S555 de lecture ou d'écriture (ou enregistrement) sans contact de données de l'horloge 120 par le terminal 150 d'être effectuées de manière sécurisée, par exemple en utilisant la norme ISO/IEC 15693.

Dans un exemple, le terminal 150 est authentifié avant de pouvoir communiquer via le canal de communication 160. Ensuite, chaque requête de lecture ou d'écriture envoyée par le terminal 150, ainsi que chaque réponse de la carte à puce 100 peut être cryptée, typiquement au moyen d'une paire de clés.

Les étapes S505, S310, S320, S350 et S555 de lecture ou d'écriture (ou enregistrement) sans contact peuvent être effectuées selon un encodage TLV (« Type Length Value » en terminologie anglo-saxonne).

Dans un exemple, une communication via le canal de communication 160 entre le circuit 110 comportant l'horloge 120 et le terminal 150, et donc les étapes S505, S310, S320, S350 et S555 de lecture ou d'écriture sont effectuées après une authentification au moyen d'un mot de passe. Le nombre de tentatives d'authentification est typiquement limité. En outre, les étapes S505, S310, S320, S350 et S555 sont effectuées selon un encodage TLV, en utilisant la norme ISO/IEC 15693 et de manière cryptée, typiquement par une paire de clés.

Les données échangées entre le microprocesseur 116 et le circuit de traitement 124 peuvent être cryptées.

Le procédé peut en outre comporter, après l'étape S555 d'enregistrement d'une quatrième donnée temporelle T4, une étape S560 de blocage de la communication entre le circuit 110 comportant l'horloge 120 et les terminaux externes à la carte à puce 100.

Dans un exemple, l'étape S560 de blocage comprend une sous-étape de modification de l'état d'un interrupteur, tel qu'un transistor, positionné entre deux spires de l'antenne 112 de l'horloge, sur une spire de l'antenne 112 ou positionnée entre une spire et la masse du circuit. Lorsque le transistor est positionné entre deux spires de l'antenne 112, l'interrupteur passe de l'état ouvert à l'état fermé, ce qui permet de court-circuiter l'antenne 112, ce qui empêche le circuit 110 de communiquer en mode sans contact. Lorsque le transistor est positionné sur une spire de l'antenne 112, l'interrupteur passe de l'état fermé à l'état ouvert, ce qui permet de couper l'antenne 112 en deux parties non reliées électriquement, et ne permet plus au circuit 110 de communiquer. Lorsque le transistor est positionné entre une spire de l'antenne 112 et la masse, l'interrupteur passe de l'état ouvert à l'état fermé, ce qui permet de relier l'antenne 112 à la masse, ceci empêchant le circuit 110 de communiquer en mode sans contact.

Dans un autre exemple, l'étape S560 de blocage comprend une sous-étape de modification de l'état d'un drapeau du circuit 110, la modification de l'état ayant pour effet de ne plus prendre en compte les requêtes de lecture ou d'écriture provenant d'un terminal externe. Ainsi, lorsque l'horloge 120 reçoit une telle requête de lecture ou d'écriture, malgré la réception de la requête, l'horloge 120 ne lit pas ou n'écrit pas dans les registres 125 de l'horloge 120. La modification de l'état d'un drapeau du circuit 110 est irréversible. Il n'est alors plus possible de lire ou d'écrire dans les registres 125 de l'horloge 120. La sécurité de la carte à puce 100 est ainsi améliorée. Dans cet exemple, l'accès au canal de communication 160 peut être toujours sécurisé, au moyen d'un mot de passe, ou de clés de chiffrement. Cependant, le circuit 110 ne répond plus aux requêtes de lecture ou d'écriture provenant d'un terminal externe.

La lecture de la deuxième donnée temporelle T2 étant une lecture sans contact, le procédé n'utilise pas d'instruments de mesure avec des contacts. La précision de la calibration est ainsi améliorée. En outre, les coûts et la durée de production de la carte à puce sont réduits.

Le procédé selon l'invention n'utilise pas de capteur de température, qui n'est pas adapté pour la calibration d'horloges de cartes à puce. En effet, un capteur de température, pour être utilisé pour calibrer une horloge, devrait être coulé dans de la résine. Or, la résine peut altérer les mesures du capteur, et rendre ainsi les mesures du capteur inutilisables. En outre, la fabrication d'une carte à puce peut nécessiter une lamination à chaud du corps de carte, ce qui peut dérégler un capteur de température.

Dans un exemple, les étapes S320, S330, S340, S350 et S355 sont réitérées N fois, N étant un nombre entier positif. Les étapes peuvent être réitérées avant l'étape S560 de blocage. Les étapes peuvent en outre être réitérées après l'étape S560 de blocage, sauf si l'étape S560 de blocage comprend une sous-étape de modification de l'état d'un drapeau du circuit 110.

La réitération d'au moins plusieurs étapes du procédé permet d'améliorer la précision de la calibration. En effet, cela permet par exemple de tenir compte d'un changement de température survenu à la suite d'une itération de l'étape S555 d'enregistrement d'une quatrième donnée temporelle T4, par exemple en raison du transport de la carte à puce 100 depuis le lieu de fabrication de la carte à puce 100 au lieu d'utilisation de la carte à puce 100.

La **figure 7** représente un procédé de fabrication d'une carte à puce, comprenant un procédé de calibration d'une horloge d'un circuit de carte à puce conforme à un exemple de mode de réalisation de l'invention.

Dans la suite de la description de la figure 7, il est considéré que la carte à puce fabriquée est la carte à puce 100 de la figure 2. Cependant, la carte à puce peut être toute carte à puce comportant circuit ayant une horloge comprenant un oscillateur et un circuit de traitement.

Le procédé de fabrication comporte une phase de pré-personnalisation P700. La phase de pré-personnalisation comporte une étape S710 de connexion de la batterie 112 au reste du circuit 110 comportant l'horloge 120.

Le circuit 110, comportant le microprocesseur 116, la mémoire 118, la batterie 112 et l'horloge 120, est ensuite positionné (étape S720) à l'intérieur de la cavité 204 de la première couche 202 du corps de carte 200.

Dans une étape S730, la résine 206 est ensuite injectée dans la cavité 204. La résine 206 est ensuite répartie uniformément (étape S740), par exemple par passage de la première couche 202 du corps de carte 200 entre deux rouleaux, puis est séchée (étape S750), par exemple au moyen d'un émetteur de rayons ultraviolets, sorte à fixer le circuit 110 dans la cavité 204.

En variante, les étapes S720, S730 S740 et S750 ne sont pas effectuées et le circuit 110 est fixé au corps de carte 200 différemment.

Le procédé peut en outre comporter une étape d'insertion du module 212 dans le corps de carte 200.

Après la phase de pré-personnalisation P700, le procédé de fabrication comporte une phase de personnalisation P760 de la carte à puce 100.

La phase de personnalisation peut comporter une étape S770 de lamination, à froid ou à chaud, de la première couche 202, éventuellement avec la deuxième couche 208 et la troisième couche 210.

L'étape S310 d'enregistrement de la première donnée temporelle T1 peut être effectuée après l'étape S710 de connexion de la batterie et avant l'étape S720 de positionnement du circuit. Les étapes S300 et S505 peuvent en outre être effectuées entre les étapes S710 et S310.

En variante, l'étape S310 d'enregistrement de la première donnée temporelle T1 peut être effectuée après l'étape S750 séchage et avant l'étape S770 de lamination. Les étapes S300 et S405 peuvent en outre être effectuées entre les étapes S750 et S310.

En variante, l'étape S310 d'enregistrement de la première donnée temporelle T1 peut être effectuée après l'étape S770 de lamination. Les étapes S300 et S505 peuvent en outre être effectuées entre les étapes S770 et S310.

La phase de personnalisation peut en outre comporter une étape S780 de personnalisation logicielle et/ou une étape S790 de personnalisation matérielle, par exemple par impression et/ou embossage du corps de carte 200.

Les étapes S320, S330, S340, S350, S555, et/ou S560 peuvent être effectuées lors de la phase de personnalisation.

La lecture de la deuxième donnée temporelle T2 du procédé de calibration étant une lecture sans contact, il est possible d'effectuer cette étape à tout moment, même lorsque le circuit 110 n'est plus accessible physiquement, après avoir été positionné à l'intérieur du corps de carte 200, ce qui engendre une grande flexibilité du procédé de fabrication de la carte à puce 100.

**Revendications**

1. Procédé de calibration d'une horloge (120) d'un circuit (110) de carte à puce (100), le procédé comportant les étapes suivantes :

   • à un premier instant (t1), enregistrement (S310) d'une première donnée temporelle (T1) d'un terminal (150) dans l'horloge (120), au moyen d'un canal de communication (160) entre ledit terminal (150) et le circuit (110) comportant l'horloge (120),
   • à un deuxième instant (t2), lecture (S320) d'une deuxième donnée temporelle (T2) de l'horloge (120), correspondant à la première donnée temporelle (T1) incrémentée par l'horloge (120) en fonction d'une première durée (D1) entre le premier instant (t1) et le deuxième instant (t2), la première durée étant supérieure ou égale à trois jours,
   • comparaison (S330) de la deuxième donnée temporelle (T2) avec une troisième donnée temporelle (T3) correspondant à la première donnée temporelle (T1) incrémentée, en fonction de la première durée (D1) entre le premier instant (t1) et le deuxième instant (t2), par le terminal (150) ou un serveur distant,
   • en fonction du résultat de la comparaison, calcul (S340) d'une première donnée de calibration (C1), **caractérisé par** le suivant:

   le procédé comporte en outre les étapes de

   • enregistrement (S350) de la première donnée de calibration (C1) dans l'horloge (120), au moyen du canal de communication (160), et,
   • blocage (S560) de la communication entre le circuit (110) comportant l'horloge (120) et les terminaux externes à la carte à puce (100),

   la lecture (S320) de la deuxième donnée temporelle (T2) étant une lecture sans contact et est effectuée au moyen du canal de communication (160),
   l'étape (S310) d'enregistrement de la première donnée temporelle (T1) étant effectuée pendant une phase de pré-personnalisation lors de la fabrication de la carte à puce (100), et
l'étape (S320) de lecture de la deuxième donnée temporelle (T2), l'étape de comparaison (S330) de la deuxième donnée temporelle (T2) avec une troisième donnée temporelle (T3), l'étape de calcul (S340) d'une première donnée de calibration (C1), et l'étape d'enregistrement (S350) de la première donnée de calibration (C1) étant effectuées pendant une phase de personnalisation lors de la fabrication de la carte à puce (100).

2. Procédé de calibration selon la revendication 1, dans lequel l'horloge (120) comprend un oscillateur (122) et un circuit de traitement (124) comprenant des registres (125) temporels et au moins un registre (125) de calibration, de sorte qu'au moins une partie de la première donnée temporelle (T1) est enregistrée dans le registre (125) temporel et la première donnée de calibration (C1) est enregistrée dans au moins un registre (125) de calibration.

3. Procédé de calibration selon la revendication 1 ou 2, comprenant en outre une étape de mise à zéro (S505) du registre (125) de calibration avant le premier instant (t1) ou au premier instant (t1).

4. Procédé de calibration selon l'une quelconque des revendications 1 à 3, dans lequel l'enregistrement (S310) de la première donnée temporelle (T1) et l'enregistrement (S350) de la première donnée de calibration (C1) est une écriture sans contact.

5. Procédé de calibration selon l'une quelconque des revendications 1 à 4, comprenant en outre une étape d'enregistrement (S555) dans l'horloge (120) d'une quatrième donnée temporelle (T4) obtenue par le terminal (150) à un troisième instant (t3), correspondant à la première donnée temporelle (T1) incrémentée en fonction d'une deuxième durée (D2) entre le premier instant (t1) et le troisième instant (t3).

6. Procédé de calibration selon l'une quelconque des revendications 1 à 5, comportant en outre une étape de création (S300) d'un canal de communication (160) entre le circuit (110) comportant l'horloge (120) et le terminal (150).

7. Procédé de calibration selon l'une quelconque des revendications 1 à 6, dans lequel les étapes de lecture (S320) d'une deuxième donnée temporelle (T2), de comparaison (S330) de la deuxième donnée temporelle (T2) avec une troisième donnée temporelle (T3), de calcul (S340) d'une première donnée de calibration (C1) et d'enregistrement (S350) de la première donnée de calibration (C1) sont réitérées.

8. Procédé de calibration selon la revendication 5, dans lequel l'étape d'enregistrement (S555) dans l'horloge d'une quatrième donnée temporelle (T4) est effectuée pendant une phase de personnalisation lors de la fabrication de la carte à puce (100).

9. Procédé de calibration selon l'une quelconque des revendications 1 à 8, ledit procédé étant appliqué au circuit (110) comportant l' horloge (120), la carte à puce (100) comportant en outre un module (212), ledit circuit (110) comportant l' horloge (120) étant séparé et indépendant du module (212).

10. Système de calibration comportant une carte à puce (100) et un terminal (150) et adapté pour mettre en oeuvre un procédé de calibration d'une horloge (120) d'un circuit (110) de carte à puce (100) selon l'une des revendications 1 à 9; où, dans le cas où l'étape de comparaison (S330) de la deuxième donnée temporelle (T2) avec la troisième donnée temporelle (T3) est mise en oeuvre par un serveur distant, le système comporte en outre ledit serveur distant.

11. Programme d'ordinateur (P1) comportant des instructions qui, lorsque ledit programme est exécuté par un terminal (150) d'un système de calibration selon la revendication 10, conduisent ledit système à mettre en oeuvre les étapes du procédé de calibration selon l'une des revendications 1 à 9.

12. Support d'enregistrement lisible par un terminal (150) d'un système de calibration selon la revendication 10, sur lequel est enregistré un programme d'ordinateur (P1) comprenant des instructions qui, lorsque ledit programme est exécuté par ledit système, conduisent ledit système à mettre en oeuvre les étapes du procédé de calibration selon l'une des revendications 1 à 9.

**Patentansprüche**

1. Verfahren zur Kalibrierung eines Taktgebers (120) einer Schaltung (110) einer Chipkarte (100), wobei das Verfahren die folgenden Schritte aufweist:

   • zu einem ersten Zeitpunkt (t1), Aufzeichnung (S310) eines ersten zeitlichen Datenwerts (T1) eines Endgeräts (150) im Taktgeber (120) mittels eines Kommunikationskanals (160) zwischen dem Endgerät (150) und der den Taktgeber (120) aufweisenden Schaltung (110),
   • zu einem zweiten Zeitpunkt (t2), Lesen (S320) eines zweiten zeitlichen Datenwerts (T2) des Taktgebers (120), entsprechend dem ersten zeitlichen Datenwert (T1) inkrementiert vom Taktgeber (120) abhängig von einer ersten Dauer (D1) zwischen dem ersten Zeitpunkt (t1) und dem zweiten Zeitpunkt (t2), wobei die erste Dauer länger als oder gleich drei Tage ist,
   • Vergleich (S330) des zweiten zeitlichen Datenwerts (T2) mit einem dritten zeitlichen Datenwert (T3) entsprechend dem ersten zeitlichen Datenwert (T1) inkrementiert, abhängig von der ersten Dauer (D1) zwischen dem ersten Zeitpunkt (t1) und dem zweiten Zeitpunkt (t2), vom Endgerät (150) oder einem fernen Server,
   • abhängig vom Ergebnis des Vergleichs, Berechnung (S340) eines ersten Kalibrierungsdatenwerts (C1),

   **gekennzeichnet durch** Folgendes:

   das Verfahren weist außerdem die Schritte auf

   • Aufzeichnung (S350) des ersten Kalibrierungsdatenwerts (C1) im Taktgeber (120) mittels des Kommunikationskanals (160), und
   • Blockierung (S560) der Kommunikation zwischen der den Taktgeber (120) aufweisenden Schaltung (110) und den Endgeräten außerhalb der Chipkarte (100),

   wobei das Lesen (S320) des zweiten zeitlichen Datenwerts (T2) ein kontaktloses Lesen ist und mittels des Kommunikationskanals (160) ausgeführt wird,
   wobei der Schritt (S310) der Aufzeichnung des ersten zeitlichen Datenwerts (T1) während einer Vorpersonalisierungsphase bei der Fertigung der Chipkarte (100) ausgeführt wird, und
   wobei der Schritt (S320) des Lesens des zweiten zeitlichen Datenwerts (T2), der Schritt des Vergleichs (S330) des zweiten zeitlichen Datenwerts (T2) mit einem dritten zeitlichen Datenwert (T3), der Schritt der Berechnung (S340) eines ersten Kalibrierungsdatenwerts (C1) und der Schritt der Aufzeichnung (S350) des ersten Kalibrierungsdatenwerts (C1) während einer Personalisierungsphase bei der Fertigung der Chipkarte (100) ausgeführt werden.

2. Kalibrierungsverfahren nach Anspruch 1, wobei der Taktgeber (120) einen Oszillator (122) und eine Verarbeitungsschaltung (124) enthält, die Zeitregister (125) und mindestens ein Kalibrierungsregister (125) enthält, so dass mindestens ein Teil des ersten zeitlichen Datenwerts (T1) im Zeitregister (125) aufgezeichnet wird, und der erste Kalibrierungsdatenwert (C1) in mindestens einem Kalibrierungsregister (125) aufgezeichnet wird.

3. Kalibrierungsverfahren nach Anspruch 1 oder 2, das außerdem einen Schritt der Nullstellung (S505) des Kalibrierungsregisters (125) vor dem ersten Zeitpunkt (t1) oder zum ersten Zeitpunkt (t1) enthält.

4. Kalibrierungsverfahren nach einem der Ansprüche 1 bis 3, wobei die Aufzeichnung (S310) des ersten zeitlichen Datenwerts (T1) und die Aufzeichnung (S350) des ersten Kalibrierungsdatenwerts (C1) ein kontaktloses Schreiben ist.

5. Kalibrierungsverfahren nach einem der Ansprüche 1 bis 4, das außerdem einen Aufzeichnungsschritt (S555) im Taktgeber (120) eines vierten zeitlichen Datenwerts (T4) enthält, der vom Endgerät (150) zu einem dritten Zeitpunkt (t3) erhalten wird, entsprechend dem ersten zeitlichen Datenwert (T1) inkrementiert abhängig von einer zweiten Dauer (D2) zwischen dem ersten Zeitpunkt (t1) und dem dritten Zeitpunkt (t3).

6. Kalibrierungsverfahren nach einem der Ansprüche 1 bis 5, das außerdem einen Schritt der Erzeugung (S300) eines Kommunikationskanals (160) zwischen der den Taktgeber (120) aufweisenden Schaltung (110) und dem Endgerät (150) aufweist.

7. Kalibrierungsverfahren nach einem der Ansprüche 1 bis 6, wobei die Schritte des Lesens (S320) eines zweiten zeitlichen Datenwerts (T2), des Vergleichs (S330) des zweiten zeitlichen Datenwerts (T2) mit einem dritten zeitlichen Datenwert (T3), der Berechnung (S340) eines ersten Kalibrierungsdatenwerts (C1) und der Aufzeichnung (S350) des ersten Kalibrierungsdatenwerts (C1) wiederholt werden.

8. Kalibrierungsverfahren nach Anspruch 5, wobei der Aufzeichnungsschritt (S555) im Taktgeber eines vierten zeitlichen Datenwerts (T4) während einer Personalisierungsphase bei der Fertigung der Chipkarte (100) ausgeführt wird.

9. Kalibrierungsverfahren nach einem der Ansprüche 1 bis 8, wobei das Verfahren an die den Taktgeber (120) aufweisende Schaltung (110) angewendet wird, wobei die Chipkarte (100) außerdem ein Modul (212) aufweist, wobei die den Taktgeber (120) aufweisende Schaltung (110) vom Modul (212) getrennt und unabhängig ist.

10. Kalibrierungssystem, das eine Chipkarte (100) und ein Endgerät (150) aufweist und geeignet ist, ein Verfahren zur Kalibrierung eines Taktgebers (120) einer Schaltung (110) einer Chipkarte (100) nach einem der Ansprüche 1 bis 9 durchzuführen; wobei in dem Fall, in dem der Schritt des Vergleichs (S330) des zweiten zeitlichen Datenwerts (T2) mit dem dritten zeitlichen Datenwert (T3) von einem fernen Server durchgeführt wird, das System außerdem den fernen Server aufweist.

11. Computerprogramm (P1), das Anweisungen aufweist, die, wenn das Programm von einem Endgerät (150) eines Kalibrierungssystems nach Anspruch 10 ausgeführt wird, das System veranlassen, die Schritte des Kalibrierungsverfahrens nach einem der Ansprüche 1 bis 9 durchzuführen.

12. Aufzeichnungsträger, lesbar für ein Endgerät (150) eines Kalibrierungssystems nach Anspruch 10, auf dem ein Computerprogramm (P1) aufgezeichnet ist, das Anweisungen enthält, die, wenn das Programm vom System ausgeführt wird, das System veranlassen, die Schritte des Kalibrierungsverfahrens nach einem der Ansprüche 1 bis 9 durchzuführen.

**Claims**

1. Method of calibrating a clock (120) of a chip card (100) circuit (110), the method comprising the following steps:

     • at a first time (t1), storing (S310) a first time datum (T1) of a terminal (150) in the clock (120), by means of a communication channel (160) between said terminal (150) and the circuit (110) comprising the clock (120),
     • at a second time (t2), reading (S320) a second time datum (T2) of the clock (120), corresponding to the first time datum (T1) incremented by the clock (120) as a function of a first duration (D1) between the first time (t1) and the second time (t2), the first duration being greater than or equal to three days,
     • comparing (S330) the second time datum (T2) with a third time datum (T3) corresponding to the incremented first time datum (T1), as a function of the first duration (D1) between the first time (t1) and the second time (t2), by the terminal (150) or a remote server,
     • as a function of the result of the comparison, calculating (S340) a first calibration datum (C1), **characterized by** the following:

     the method further comprises the steps of

         • storing (S350) the first calibration datum (C1) in the clock (120), by means of the communication channel (160), and,
         • blocking (S560) the communication between the circuit (110) comprising the clock (120) and the terminals external to the chip card (100),

the reading (S320) of the second time datum (T2) being contactless reading and being carried out by means of the communication channel (160),

the step (S310) of storing the first time datum (T1) being carried out during a pre-customization phase when the chip card (100) is being manufactured, and

the step (S320) of reading the second time datum (T2), the step (S330) of comparing the second time datum (T2) with a third time datum (T3), the step (S340) of calculating a first calibration datum (C1), and the step (S350) of storing the first calibration datum (C1) being carried out during a customization phase when the chip card (100) is being manufactured.

2. Calibration method according to Claim 1, wherein the clock (120) comprises an oscillator (122) and a processing circuit (124) comprising time registers (125) and at least one calibration register (125), so that at least part of the first time datum (T1) is stored in the time register (125) and the first calibration datum (C1) is stored in at least one calibration register (125).

3. Calibration method according to Claim 1 or 2, further comprising a step (S505) of setting the calibration register (125) to zero before the first time (t1) or at the first time (t1).

4. Calibration method according to any one of Claims 1 to 3, wherein the storing (S310) of the first time datum (T1) and the storing (S350) of the first calibration datum (C1) is contactless writing.

5. Calibration method according to any one of Claims 1 to 4, further comprising a step (S555) of storing in the clock (120) a fourth time datum (T4) obtained by the terminal (150) at a third time (t3), corresponding to the first time datum (T1) incremented as a function of a second duration (D2) between the first time (t1) and the third time (t3).

6. Calibration method according to any one of Claims 1 to 5, further comprising a step (S300) of creating a communication channel (160) between the circuit (110) comprising the clock (120) and the terminal (150).

7. Calibration method according to any one of Claims 1 to 6, wherein the steps of reading (S320) a second time datum (T2), of comparing (S330) the second time datum (T2) with a third time datum (T3), of calculating (S340) a first calibration datum (C1) and of storing (S350) the first calibration datum (C1) are repeated.

8. Calibration method according to Claim 5, wherein the step (S555) of storing in the clock a fourth time datum (T4) is carried out during a customization phase when the chip card (100) is being manufactured.

9. Calibration method according to any one of Claims 1 to 8, said method being applied to the circuit (110) comprising the clock (120), the chip card (100) further comprising a module (212), said circuit (110) comprising the clock (120) being separated from and independent of the module (212).

10. Calibration system comprising a chip card (100) and a terminal (150) and designed to implement a method for calibrating a clock (120) of a chip card (100) circuit (110) according to one of Claims 1 to 9; where, in the event the step (S330) of comparing the second time datum (T2) with the third time datum (T3) is implemented by a remote server, the system further comprises said remote server.

11. Computer program (P1) comprising instructions which, when said program is executed by a terminal (150) of a calibration system according to Claim 10, lead said system to implement the steps of the calibration method according to one of Claims 1 to 9.

12. Storage medium readable by a terminal (150) of a calibration system according to Claim 10, on which is stored a computer program (P1) comprising instructions which, when said program is executed by said system, lead said system to implement the steps of the calibration method according to one of Claims 1 to 9.

100

212

218

216

220

110

112

114

124

116 118

125 125

122

120

160

150

152 155

153 156

154 P1 157

**FIG.1**

**FIG.2**

212 218 214 200 110 208 202

220 216 206 210 204

100

**FIG.5**

- Création canal de communication — S300
- Mise à zéro registre calibration — S505
- Enregistrement T1 — S310
- Lecture T2 — S320
- Comparaison T2 avec T3 — S330
- Calcul C1 et/ou C2 — S340
- Enregistrement C1 et/ou C2 — S350
- Enregistrement T4 — S555
- Blocage communication — S560

xN

**FIG.3**

- Enregistrement T1 — S310
- Lecture T2 — S320
- Comparaison T2 avec T3 — S330
- Calcul C1 et/ou C2 — S340
- Enregistrement C1 et/ou C2 — S350

**FIG.4**

T1 / t1
T2, T3 / t2
T4, T5 / t3
D1, D2
t

$\Delta t$

~600

~610

~620

~630

~640

**FIG.6**

EP 3 469 446 B1

P700

| Connexion batterie | ~S710 |
| S310 |
| Positionnement circuit | ~S720 |
| Injection résine | ~S730 |
| Répartition résine | ~S740 |
| Séchage résine | ~S750 |

S310

P760

| Lamination | ~S770 |
| S310 |
| Personnalisation logicielle | ~S780 |
| Personnalisation matérielle | ~S790 |

**FIG.7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0770953 A2
- EP 1772794 A1